# EUROPEAN PATENT APPLICATION

(11) **EP 3 588 328 A1**
(43) Date of publication of application: **01.01.2020**
(21) Application number: 18179004.9
(22) Date of filing: 21.06.2018
(51) Int. Cl.: G06F 17/27, G10L 15/18

(54) **ASSESSING A NATURAL LANGUAGE PROCESSING (NLP) ENGINE**

(71) Applicant: Vodafone GmbH, 40549 Düsseldorf (DE)
(72) Inventor: Guerra Vieira dos Santos, João José, 40217 Düsseldorf (DE); Neumann, Thomas, 40882 Ratingen (DE)
(74) Representative: Jostarndt Patentanwalts-AG

(57) **Abstract**

A method (100) for assessing a linguistic capability of a natural language processing engine (41) provided with an artificial intelligence, particularly a natural language processing engine (41) of a chat bot, comprising the steps: providing (110) an original natural language utterance (71), submitting (121) the original natural language utterance (71) and at least one category (60) assigned thereto to the natural language processing engine (41) for training (120) the natural language processing engine (41), generating a derived natural language utterance (81) by linguistically modifying (140) the original natural language utterance (71), submitting (151) the derived natural language utterance (81) to the natural language processing engine (41) for having the natural language processing engine (41) assign at least one category (60) thereto, and evaluating (160) the at least one assigned category.

## Description

The invention relates to a method for assessing a linguistic capability of a natural language processing (NLP) engine provided with an artificial intelligence (AI), particularly a natural language processing engine of a chat bot. Furthermore, the invention relates to a memory device comprising a computer program for assessing a linguistic capability of a natural language processing engine provided with an artificial intelligence.

A natural language processing engine, NLP engine for short, is a computer program, i.e. a software to be executed by a processor of a computer, being capable to interpret a natural language query of a user and adequately respond thereto. Thus, a conversation may develop between the user and the NLP engine. While earlier NLP engines relied on pattern matching algorithms, actual NLP engines are provided with an artificial intelligence and, consequently, may be trained for improving the interpretation accuracy and response quality.

Chat bots typically comprise NLP engines determining their respective linguistic capabilities. A chat bot may be used by a company for customer care purposes. For instance, the chat bot may be integrated in an online platform of the company in order to offer a prompt customer service at all times and without any human intervention on the part of the company. The chat bot preferably comprises a user interface, i.e. a conversational interface, where a user can enter a natural language utterance and submit the entered utterance to the chat bot. For example, the utterance may be a simple query. The chat bot then interprets the submitted utterance and responds by displaying another natural language utterance on the user interface which is usually an answer to the submitted query. Generally, the user interface may be visual, acoustic and/or haptic.

Apart from that, a chat bot in most cases comprises an administrative interface which, for instance, may be used by a business user of the company for training the chat bot and/or a plurality of so called RESTful application programming interfaces (API) allowing for a computer program to automatically interact with the chat bot.

There are many chat bots available on the market each having, in particular, a different linguistic capability which furthermore may even be language dependent. Unfortunately, the linguistic capability of a chat bot is not an evident feature as chat bot suppliers usually do not publish any details concerning this aspect. In other words, concerning its language capability a chat bot has to be considered as a black box from an external point of view.

However, the linguistic capability of a chat bot is an essential feature when choosing a particular chat bot to be integrated into an online platform of a company. Namely, an effort for training a chat bot is inversely related to its linguistic capability, i.e. the better the linguistic capability of a chat bot is, the less effort has to be expended in training the chat bot. The training effort, in turn, immediately affects the project costs for a chat bot integration. Apart from that, a customer's satisfaction in interacting with the chat bot corresponds to the linguistic capability of the chat bot. Thus, choosing a chat bot with advanced linguistic capabilities is crucial for a company aiming at customer care automation.

It is therefore an object of the present invention to suggest an easy to execute and reliable method for assessing a linguistic capability of an NLP engine provided with an artificial intelligence. Another object of the present invention is providing a memory device comprising a computer program for assessing a linguistic capability of an NLP engine provide with an artificial intelligence.

The object is solved by a method for assessing a linguistic capability of a NLP engine provided with an artificial intelligence according to claim 1 and a memory device comprising a computer program for assessing a linguistic capability of an NLP engine provided with an artificial intelligence according to claim 15. Advantageous embodiments of the invention are indicated in the dependent claims.

The invention relates to a method for assessing a linguistic capability of a natural language processing engine provided with an artificial intelligence, particularly a natural language processing engine of a chat bot.

The method comprising the steps:
- providing an original natural language utterance,
- training the natural language processing engine by submitting the original natural language utterance and at least one category assigned thereto to the natural language processing engine,
- generating a derived natural language utterance by linguistically modifying the original natural language utterance,
- testing the natural language processing engine by submitting the derived natural language utterance to the natural language processing engine, and
- evaluating at least one category assigned to the derived natural language utterance by the natural language processing engine.

The method according to the invention assesses the linguistic capability of the NLP engine by testing the behavior of the NLP engine when it is faced with test utterances which substantially match the meaning of corresponding training utterances, i.e. original natural language utterances, but differ linguistically from the training utterances. Thus, the method empirically detects to what extent the NLP engine is capable to adequately deal with linguistic variations, i.e. correctly understands a test utterance, i.e. a derived natural language utterance, despite its linguistic deviation from a corresponding training utterance.

A natural language processing engine of a chat bot is preferably assessed. Chat bots may be used for providing a website of a company with an automatic customer care functionality and generally comprise a natural language processing engine provided with an artificial intelligence.

Preferably an utterance related to a special topical domain is provided as the original natural language utterance. In practical cases the customer care is restricted to one topical domain or few topical domains depending on the business activity of a company. For reducing the effort to expend for training the natural language processing engine any training utterance may be exclusively chosen to belong to a relevant topical domain.

An utterance of a conversational log may be provided as the original natural language utterance. Conversational logs comprise a large number of real life user utterances and, thus, may optimally reflect a realistic behavior and use of language of a plurality of relevant users.

Advantageously, an intent and/or an entity is assigned to each utterance as the at least one category. Exemplary intents are 'greeting', 'account balance', 'table reservation' and the like. Entities may comprise 'time' , 'number', 'location', 'model' and the like. These categories enable the natural language processing engine for precisely recognizing a user's concern from the submitted utterance.

The original utterance may be manually categorized. The manual categorization of the original utterance may result in an increased precision of any assigned category as it is based on a human, i.e. intellectual, understanding of the original utterance. Training the NLP engine by means of manually categorized original utterances will result in a higher interpretation and response quality of the NLP engine. Best results will be achieved if the categorization is done by a native speaker of the respective language. However, the original utterance may be automatically categorized as an alternative.

In an embodiment of the method the original utterance is manually modified by a native speaker for generating the corresponding derived utterance. The manual modification particularly by a native speaker may result in a good approximation of an expectable variability of user utterances.

In an alternative embodiment of the method the original utterance is automatically modified by a language tool, particularly a language structure engine, a dictionary, a thesaurus or a grammar, for generating the corresponding derived utterance, particularly more than one corresponding derived utterances. The language tool can provide a plurality of defined modifications of the original utterance very fast and precisely.

The original utterance is preferably modified by dividing the original utterance into a plurality of tokens, identifying at least one relevant token thereof and replacing the identified token with a variation thereof and reassembling the tokens. The tokenization may be done by any known tokenizer program. Practically any token of the utterance may be replaced independently. Relevant tokens to be varied are positive or negative statements, nouns, verbs, adjectives, adverbs, interrogatives and the like, but also composite expressions.

The variation may be obtained by choosing a synonym, by conjugating a verb, by stemming, by lemmatizing, by misspelling, by altering a case of a letter, by changing a numeral into its spelled-out form and vice versa, by changing a spelled-out unit into its acronym form and vice versa, by splitting or combining utterances, by semantically associating, by adding an uncertainty, by turning into the contrary and/or by varying a positive statement or a negative statement. The enumeration is not supposed to be complete. Further variations may be applied. Particularly, a plurality of different variations may be introduced into a single original utterance in order to generate a plurality of corresponding derived utterances. It is noted that, any uncertainty added and any contrary formed are to be considered as substantially matching the original meaning in the sense of the present invention as they do not alter the concern of an utterance but only affect the modality thereof.

For evaluating it is preferable that the at least one category assigned to each derived utterance by the natural language processing engine is compared with the at least one category assigned to the corresponding original utterance. Briefly, a before/after comparison is made. In case of a respective identity of the categories the NLP engine has a linguistic capability corresponding to the linguistic modifications applied to the original utterance. Otherwise, the NLP engine at least partly lacks a corresponding capability.

A linguistic capability value is advantageously calculated using a number of correctly assigned categories, a number of incorrectly assigned categories, a number of missing categories and/or a number of odd categories as a measure for the linguistic capability of the natural language processing engine. Due to the linguistic modifications applied to an original utterance a category assigned to a derived utterance by the NLP engine may be correct, incorrect, missing or odd. The linguistic capability value is the higher the more correct categories and the less incorrect, missing or odd categories are assigned to a derived utterance. The respective numbers may be weighted in order to differentiate their relevance for the linguistic capability. The calculated linguistic capability value may be, for instance, a percentage, particularly an integer percentage, between 0% and 100% or a school mark between 1 and 6. Alternatively, the categories assigned by the NLP engine may be scored. Exemplary scores may be as follows. In case the NLP engine assigns a correct category, a high score of 5 may be set. If the NLP engine does miss a due category but asks the user for a repetition, a neutral score of 0 is set. And a negative score of -1 is set if the NLP engine assigns a wrong or an odd category. The linguistic capability value may be restricted to a single linguistic variation type, i.e. synonym variation or the like, by averaging over any score associated with said linguistic variation type. Alternatively or additionally, an over all linguistic capability value may be calculated by averaging over any score independently of a linguistic variation type.

The linguistic capability of the natural language processing engine may be assessed for a plurality of languages. Assessing the linguistic capability for a plurality of languages takes a multi-lingual user group into account.

Preferable embodiments of the method comprise the steps:
- a training data set having a plurality of original natural language utterances is provided,
- each original utterance of the training data set is submitted to the natural language processing engine for training the natural language processing engine,
- an assessing data set having a plurality of corresponding derived utterances is generated,
- each derived utterance of the assessing data set is submitted to the natural language processing engine for testing the natural language processing engine, and
- each assigned category assigned to the derived utterance by the natural language processing engine is evaluated.
In other words, the method is preferably executed with a plurality of original utterances for a reliable and broad assessment of the linguistic capability of the NLP engine.

The present invention is also related to a memory device comprising a computer program for assessing a linguistic capability of a natural language processing engine provided with an artificial intelligence, particularly a linguistic capability of a chat bot, the computer program being executable by a processor and being configured for
- providing an original natural language utterance,
- training the natural language processing engine by submitting the original natural language utterance and at least one category assigned thereto to the natural language processing engine,
- generating a derived natural language utterance by linguistically modifying the original natural language utterance,
- testing the natural language processing engine by submitting the derived natural language utterance to the natural language processing engine, and
- evaluating at least one category assigned to the derived natural language utterance by the natural language processing engine,
particularly being configured for carrying out a method according to the invention. The memory device may be, for instance, a memory chip of a computer, a USB stick, a DVD disk and the like. A coding of the computer program, particularly a binary representation thereof, may depend from the processor to execute it. The memory device, hence, enables a computer or the like comprising the processor for automatically applying the method steps to the natural language processing engine.

The method and the memory device comprising a software product for assessing a linguistic capability of an NLP engine are described in more detail by reference to a preferred embodiment and the accompanying drawings.
- Fig. 1: shows in a schematic view a block diagram of a conversation between a user and a chat bot according to prior art;
- Fig. 2: shows in a schematic view a detailed block diagram of the chat bot shown in figure 1; and
- Fig. 3: shows in a schematic view a flow chart of a method according to an embodiment of the present invention for assessing a linguistic capability of a natural language processing engine provided with an artificial intelligence.

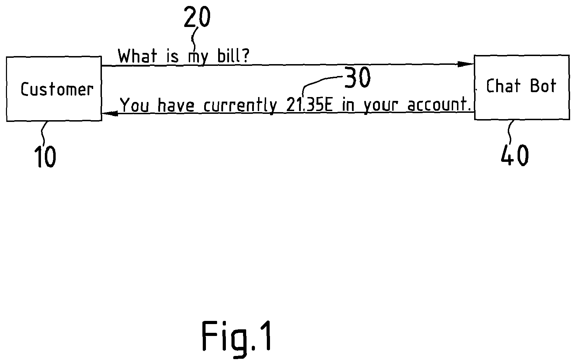

Fig. 1 shows in a schematic view a block diagram of an interaction, i.e. conversation, between a user 10, i.e. a customer of a company, and a chat bot 40 according to prior art. The chat bot 40 may be integrated in a website of the company for customer care purposes. During the interaction, the user 10 submits a natural language utterance, i.e. a query 20, to the chat bot 40 which, in turn, returns a natural language utterance, i.e. an answer 30, in response according to its interpretation of the user's query 20.

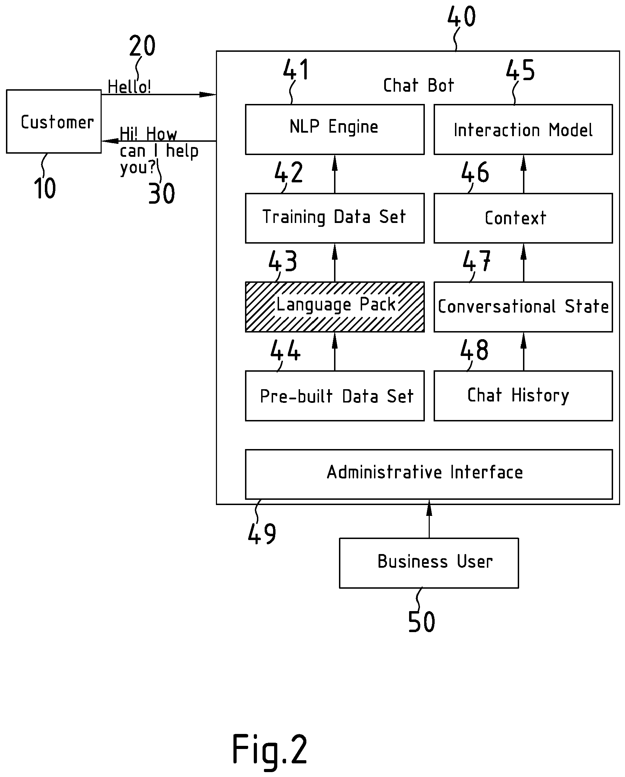

Fig. 2 shows in a schematic view a detailed block diagram of the chat bot 40 shown in figure 1. The chat bot 40 comprises a natural language processing (NLP) engine 41 provided with an artificial intelligence and a training data set 42 the NLP engine 41 is based on. The NLP engine 41 uses artificial intelligence algorithms in order to categorize utterances by assigning intents and/or entities to them. For example, the NLP engine 41 may assign a "greeting"-intent to the utterance "Hello!" or a "table reservation"-intent and a "time"-entity "tomorrow" to the utterance "Can you book a table for tomorrow?".

The chat bot 40 further comprises a language pack 43 which the NLP engine 41 is also based on, and a pre-built data set 44 which, in turn, the language pack 43 is based on. The language pack comprises tools that support the NLP engine 41 in recognizing a submitted utterance as being part of a particular language and attribute a meaning the submitted utterance. Exemplary tools are a dictionary, a grammar, a lexicon, graphs and the like. The pre-built data set 44 usually is provided by a supplier of the chat bot 40 and allows for a basic out-of-the-box assignment of the NLP engine 41. Most chat bot suppliers provide "Hi!", "Hello!", "Good afternoon!" and "How are you?" and the like as pre-built utterances with an assigned "greeting"-intent, respectively. The language pack 43 and the pre-build data set 44 define a linguistic capability of the NLP engine 41 to be assessed.

The chat bot 40 further comprises an interaction model 45 and a conversational context 46 being taken into account by the interaction model 45. The interaction model 45 is configured to contextually map on ore more categories, i.e. intents and/or entities, assigned to a user's 10 utterance, i.e. a query 20, to a corresponding utterance, i.e. an answer 30, of the chat bot 40 to be responded. For instance, the utterance "Hi! How can I help you?" may be mapped to a user's utterance with an assigned "greeting"-intent as a response of the chat bot 40.

The conversational context 46 may comprise an information concerning an identity of the user 20, a user's 20 status, for instance a contract type, or the like. The chat bot 40 comprises an actual conversational state 47 being also taken into account by the interaction model 45 and a continuously updated chat history 48 the conversational state 47 is based on. The conversational state 47 keeps track of the actual state of a conversation. When, for instance, the user 20 submits "I'd like to book a table please.", the chat bot 40 responds "For how many people?" and the user 20 submits "Five people please.". Due to the conversational state 47 the chat bot is able to recognize that the second submitted utterance does not start a new conversation but is related to the utterance submitted by the user 20 previously.

Apart from that, the chat bot 40 comprises an API to be connected to by a computer program and an administrative interface 49 to be used, for instance, by a business user 50. The administrative interface 49 is configured to allow the business user 50 for administrating the chat bot 40 which usually includes a training of the chat bot 40.

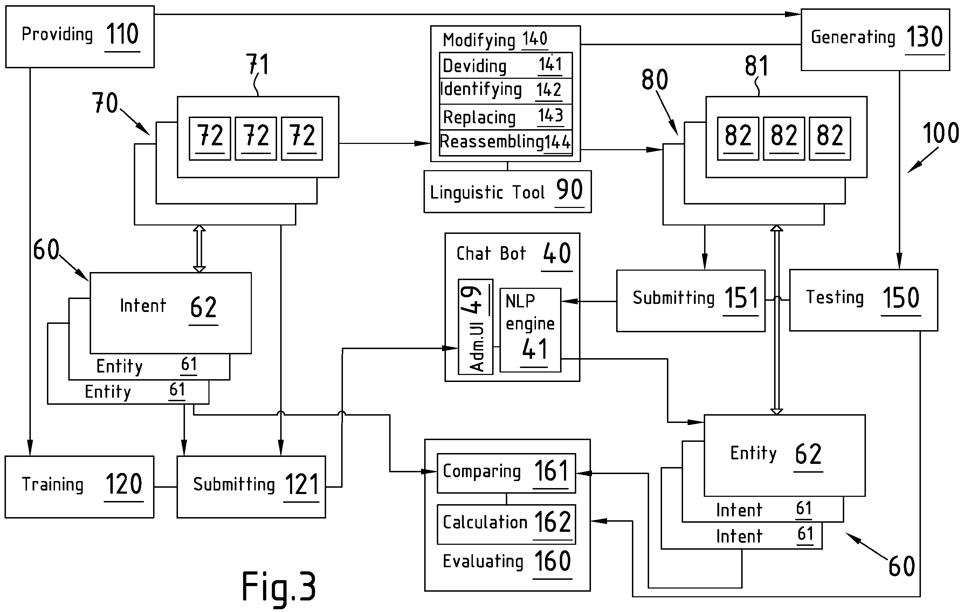

Fig. 3 shows in a schematic view a flow chart of a method 100 according to an embodiment of the present invention for assessing a linguistic capability of the natural language processing engine 41 of the chat bot 40. The method 100 is by a processor of a computer which accesses a memory device comprising a computer program coding the method 100 and being executable by the processor for assessing a linguistic capability of the natural language processing engine 41 of the chat bot 40.

The computer program is connectable to the API of the chat bot 40 and configured for providing 110 an original natural language utterance 71, training 120 the natural language processing engine 41 by submitting 121 the original natural language utterance 71 and at least one category 60 assigned thereto to the natural language processing engine 41, generating 130 a derived natural language utterance 81 by linguistically modifying 140 the original natural language utterance 71, testing 150 the natural language processing engine 41 by submitting 151 the derived natural language utterance 81 to the natural language processing engine 41, and evaluating 160 at least one category 60 and preferably each category 60 assigned to the derived natural language utterance 81 by the natural language processing engine 41.

In case the linguistic capability of the natural language processing engine 41 has to be assessed for a plurality of languages, the following steps have to be executed for each required language.

For assessing the linguistic capability of the natural language processing engine 41 of the chat bot 40 the computer program connects to the API of the chat bot 40 and provides a training data set 70 having a plurality of original natural language utterances 71 of the language to be assessed. The natural language utterances 71 may and mostly will be related to a special topical domain, and at least some of them may be taken from a conversational log, i.e. a chat history.

Each natural language utterance 71 is an intent 61 and/or an entity 62 assigned to as a category. The assignment is done manually by a human on the basis of his understanding. Alternatively, an existing categorized data set may be used as the training data set 70.

Each original utterance 71 of the training data set 70 is submitted 121 to the natural language processing engine 41 via the administrative interface 49 by a business user 50 for training 120 the natural language processing engine 41.

In another step, an assessing data set 80 having a plurality of corresponding derived utterances 81 is generated 130 by linguistically modifying 140 each original natural language utterance 71. For obtaining the derived utterances 81 each original utterance 71 is automatically modified 140 by a linguistic tool 90, particularly a language structure engine, a dictionary, a thesaurus or a grammar, for generating 130 the corresponding derived utterance 81, particularly more than one corresponing derived utterance 81. However, an original utterance 71 may even be manually modified 140 by a native speaker for generating 130 one or more corresponding derived utterances 81.

In detail, the original utterance 71 is modified 140 by dividing 141 the original utterance into a plurality of tokens 72, identifying 142 at least one relevant token 72 thereof, replacing 143 the at least one identified token 72 with a variation thereof and reassembling the replaced tokens 82. The variation of the identified token 72 is obtained by choosing a synonym, by conjugating a verb, by stemming, by lemmatizing, by misspelling, by altering a case of a letter, by changing a numeral into its spelled-out form and vice versa, by changing a spelled-out unit into its acronym form and vice versa, by splitting or combining utterances, by semantically associating, by adding an uncertainty, by turning into the contrary and/or by varying a positive statement or a negative statement.

Replacing the original utterances "I need a new phone" and "I want to purchase a mobile" by the derived utterances "I need a new telephone" and "I want to buy a mobile", respectively, are exemplary synonym variations. Replacing the original utterance "I have an iPhone" by the derived utterances "I've an iPhone", "I had an iPhone" of "I'm having an iPhone" are exemplary conjugation variations. Replacing the original utterance "gold" by the derived utterance "golden" is an exemplary stemming/lemmatizing variation. Replacing the original utterances "Mobile", "new", "need" and "telephone" by the derived utterances "Moblie", "neew", "nedd" and "telehone", respectively, are exemplary misspelling variations. Replacing the original utterances "64", "128 GB" and "iPhone" by "sixty four", "128 gigabytes" and "IPHONE", respectively, are exemplary variations altering a case of a letter, changing a numeral into its spelled-out form and vice versa and changing a spelled-out unit into its acronym form and vice versa. Replacing the original utterances "I broke my phone and need a new one" and "With my phone. I need a new one" by the derived utterances "I broke my phone" followed by "and need a new one" and "With my phone" followed by "I need a new one", respectively, are exemplary variations splitting or combining utterances.

Starting from an option list "White", "Black", "Silver" and "Gold" offered by the chat bot 40, replacing the original utterance "Black" by the derived utterances "The second option", "The 2^{nd} option", "Option 2", or "2^{nd} choice" are exemplary semantic association variations. Replacing the original utterances "yes", "sure", "ok" and "no", "nope" by the derived utterances "Absolutely", "I'd love to", "yep", "sure" and "not really", "no way", "absolutely not", respectively, are exemplary variations varying a positive or negative statement. Replacing the original utterances "yes", "no" by the derived utterances "I don't know", "I'm not sure", "maybe" are exemplary variations adding uncertainties. Replacing the original utterances "I want to buy an iPhone", "Black" by the derived utterances "I don't want to buy an iPhone", "Not black", respectively, are exemplary variations turning into the contrary.

The natural language engine 41 is tested 150 by submitting 151 each derived utterance 81 of the assessing data set 80 to the natural language processing engine 41. After that, each category 60 assigned to each derived utterance 81 by the natural language processing engine 41 is evaluated 160. For evaluation 160 the categories 60 assigned to each derived utterance 81 by the natural language processing engine 41 are compared 161 with the categories 60 assigned to the corresponding original utterance 71. As a result, a linguistic capability value of the natural language processing engine 41 is calculated 162 using a number of correctly assigned categories 60, a number of incorrectly assigned categories 60, a number of missing categories 60 and/or a number of odd categories 60 as a measure for the linguistic capability of the natural language processing engine 41 and averaging over the training data set 70.

While the examples given above are all presented in the English language the skilled person will appreciate that the outlined concepts may be readily applied to any other natural language.

It is an essential advantage of the suggested method that the method allows for empirically assessing a linguistic capability of an NLP engine provided by an artificial intelligence, particularly a chat bot, without any knowledge of its internal logical structure or its functional modules. Accordingly, the choice of an adequate chat bot for customer care automation can be more reliably made. As a result, the effort for training the chosen chat bot will be considerably reduced.

As another advantage, the suggested method may be automatically executed without any human intervention. This allows for a quick assessment and optimal comparison of a plurality of alternative chat bots, thus, considerably reducing the time needed for choosing an adequate chat bot.

A further benefit of the suggested method is an excellent adaptability. By restricting the modification of original utterances on a single-type linguistic variation or, at least, few types of linguistic variations the assessment can be focused on particular linguistic capabilities of the NLP engine.

### Reference Numerals

- 10: User
- 20: Natural language utterance
- 30: Natural language utterance
- 40: Chat Bot
- 41: NLP engine
- 42: Training data set
- 43: Language pack
- 44: Pre-built data set
- 45: Interaction model
- 46: Context
- 47: Conversational State
- 48: Chat History
- 49: Administrative interface
- 50: Business user
- 60: Category
- 61: Intent
- 62: Entity
- 70: Training data set
- 71: Original utterance
- 72: Original token
- 80: Assessing data set
- 81: Derived utterance
- 82: Replaced token
- 90: Linguistic tool
- 100: Method
- 110: Providing
- 120: Training
- 121: Submitting
- 130: Generating
- 140: Modifying
- 141: Dividing
- 142: Identifying
- 143: Replacing
- 144: Reassembling
- 150: Testing
- 151: Submitting
- 160: Evaluating
- 161: Comparing
- 162: Calculating

## Claims

1. A method (100) for assessing a linguistic capability of a natural language processing engine (41) provided with an artificial intelligence, comprising the steps:
- providing (110) an original natural language utterance (71),
- training (120) the natural language processing engine (41) by submitting (121) the original natural language utterance and at least one category (60) assigned thereto to the natural language processing engine (41),
- generating (130) a derived natural language utterance (81) by linguistically modifying (140) the original natural language utterance (71),
- testing (150) the natural language processing engine (41) by submitting (151) the derived natural language utterance (81) to the natural language processing engine (41), and
- evaluating (160) at least one category (60) assigned to the derived natural language utterance (81) by the natural language processing engine (41).

2. The method according to claim 1,
**characterized in that**
the natural language processing engine (41) of a chat bot (40) is assessed.

3. The method according to one of claims 1 or 2,
**characterized in that**
an utterance related to a special topical domain is provided (110) as the original natural language utterance (71).

4. The method according to one of claims 1 to 2,
**characterized in that**
an utterance of a conversational log is provided (110) as the original natural language utterance (71).

5. The method according to claim 4,
**characterized in that**
an intent (61) and/or an entity (62) is assigned to each utterance (71) as the at least one category (60).

6. The method according to one of claims 1 to 5,
**characterized in that**
the at least one category (60) is assigned to the original utterance (71) manually.

7. The method according to one of claim 1 to 6,
**characterized in that**
the original utterance (71) is manually modified (140) by a native speaker for generating (130) the corresponding derived utterance (81).

8. The method according to one of claims 1 to 6,
**characterized in that**
the original utterance (71) is automatically modified (140) by a linguistic tool (90), particularly a language structure engine, a dictionary, a thesaurus or a grammar, for generating (130) the corresponding derived utterance (81), particularly more than one corresponding derived utterance (81).

9. The method according to claims 1 to 8,
**characterized in that**
the original utterance (71) is modified (140) by dividing (141) the original utterance into a plurality of tokens (72), identifying (142) at least one relevant token (72) thereof, replacing (143) the identified token (72) with a variation thereof reassembling the tokens (72).

10. The method according to claim 9,
**characterized in that**
the variation of a token (72) is obtained by choosing a synonym, by conjugating a verb, by stemming, by lemmatizing, by misspelling, by altering a case of a letter, by changing a numeral into its spelled-out form and vice versa, by changing a spelled-out unit into its acronym form and vice versa, by splitting or combining utterances, by semantically associating, by adding an uncertainty, by turning into the contrary and/or by varying a positive statement or a negative statement.

11. The method according to one of claims 1 to 10,
**characterized in that**
for evaluating (160) the at least one category (60) assigned to each derived utterance (81) by the natural language processing engine (41) is compared (161) with the at least one category (60) assigned to the corresponding original utterance (71).

12. The method according to one of claims 1 to 11,
**characterized in that**
a linguistic capability value is calculated (162) using a number of correctly assigned categories (60), a number of incorrectly assigned categories (60), a number of missing categories (60) and/or a number of odd categories (60) as a measure for the linguistic capability of the natural language processing engine (41).

13. The method according to one of claims 1 to 12,
**characterized in that**
the linguistic capability of the natural language processing engine (41) is assessed for a plurality of languages.

14. The method according to one of claims 1 to 13,
**characterized in that**
- a training data set (70) having a plurality of original natural language utterances (71) is provided (110),
- each original utterance (71) of the training data set (70) is submitted (121) to the natural language processing engine (41) for training (120) the natural language processing engine (41),
- an assessing data set (80) having a plurality of corresponding derived utterances (81) is generated (130),
- each derived utterance (81) of the assessing data set (80) is submitted (151) to the natural language processing engine (41) for testing (150) the natural language processing engine (41), and
- each category (60) assigned to each derived utterance (81) by the natural language processing engine (41) is evaluated (160).

15. A memory device comprising a computer program for assessing a linguistic capability of a natural language processing engine (41) provided with an artificial intelligence, particularly a natural language processing engine (41) of a chat bot (40), the computer program being executable by a processor and being configured for
- providing (110) an original natural language utterance (71),
- training (120) the natural language processing engine (41) by submitting (121) the original natural language utterance (71) and at least one category (60) assigned thereto to the natural language processing engine (41),
- generating (130) a derived natural language utterance (81) by linguistically modifying (140) the original natural language utterance (71),
- testing (150) the natural language processing engine (41) by submitting (151) the derived natural language utterance (81) to the natural language processing engine (41), and
- evaluating (160) at least one category (60) assigned to the derived natural language utterance (81) by the natural language processing engine (41),
particularly being configured for carrying out a method (100) according to one of claims 1 to 14.
